# EUROPÄISCHE PATENTANMELDUNG

(11) **EP 2 196 265 A2**
(43) Veröffentlichungstag der Anmeldung: **16.06.2010**
(21) Anmeldenummer: 09015121.8
(22) Anmeldetag: 07.12.2009
(51) Int. Cl.: B04B 1/20, B04B 9/12

(54) **Dekanterzentrifuge**

(30) Priorität: 13.12.2008 DE 102008062160
(71) Anmelder: Schaeffler KG, 91074 Herzogenaurach (DE)
(72) Erfinder: Montag, Tobias, 97532 Üchtelhausen (DE); Zylla, Josef, 97453 Schonungen (DE)

(57) **Zusammenfassung**

Dekanterzentritugen dienen zur Separation von Stoffen, insbesondere von Flüssigkeiten und Sedimenten, mit unterschiedlicher spezifischer Dichte. Es ist eine Aufgabe der vorliegenden Erfindung, eine Dekanterzentrifuge hinsichtlich der Standfestigkeit im industriellen Alltag zu verbessern.
Hierzu wird eine Dekanterzentrifuge (1) zur Separation von Stoffen vorgeschlagen mit einer Trommel (6) und mit einer Schneckeneinrichtung (7), welche in der Trommel (6) angeordnet ist, wobei die Schneckeneinrichtung (7) über eine erste Lagervorrichtung (15,19) relativ zu der Trommel (6) um eine Drehachse (2) drehbar gelagert ist, und wobei die erste Lagervorrichtung ein oder mehrere Magnetlager (15,19) aufweist.

## Beschreibung

### Gebiet der Erfindung

Die Erfindung betrifft eine Dekanterzentrifuge zur Separation von Stoffen mit einer Trommel und mit einer Schneckeneinrichtung, welche in der Trommel angeordnet ist, wobei die Schneckeneinrichtung über eine erste Lagervorrichtung relativ zu der Trommel um eine Drehachse drehbar gelagert ist.

Dekanterzentrifugen dienen zur Separation von Stoffen, insbesondere von Flüssigkeiten und Sedimenten, mit unterschiedlicher spezifischer Dichte. Die Dekanterzentrifugen ermöglichen in manchen Ausführungsformen einen kontinuierlichen Betrieb, so dass eine Startmischung der Stoffe kontinuierlich in zwei Stoffströme mit unterschiedlichen Stoffen getrennt wird.

Beispielsweise offenbart die Druckschrift DE 693 149 10 T2 eine derartige Dekanterzentrifuge und bildet wohl den nächstkommenden Stand der Technik. Die in dieser Druckschrift beschriebene Dekanterzentrifuge arbeitet mit einem Vollmantel, der um eine horizontale Achse rotiert und einen spiralförmigen Schneckenförderer enthält, um einen der Dekanterzentrifuge zugeführten Schlamm in seine Feststoff- und Flüssigbestandteile zu trennen. Der Spiralförderer rotiert mit einer etwas anderen Geschwindigkeit in dem Vollmantel als der Vollmantel selbst, wobei die schwereren Feststoffe zu Austrittsöffnungen an einem Ende des Vollmantels gefördert werden. Die abgeschiedene Flüssigkeit fließt in die entgegengesetzte Richtung und tritt aus Öffnungen am gegenüberliegenden Ende des Vollmantels aus. Zur Lagerung des Spiralförderers in der Trommel werden üblicherweise Wälzlager, insbesondere Zylinderrollenlager, eingesetzt. Die Dekanterzentrifugen sind normalerweise für den harten Industrieeinsatz konzipiert.

Es ist eine Aufgabe der vorliegenden Erfindung, eine Dekanterzentrifuge hinsichtlich der Standfestigkeit im industriellen Alltag zu verbessern.

Diese Aufgabe wird durch eine Dekanterzentrifuge mit den Merkmalen des Anspruches 1 gelöst. Bevorzugte oder vorteilhafte Ausführungsformen der Erfindung ergeben sich aus den Unteransprüchen, der nachfolgenden Beschreibung sowie den beigefügten Figuren.

Die Erfindung behandelt eine Dekanterzentrifuge zur Separation von Stoffen. Beispielsweise kann die Dekanterzentrifuge als Klärdekanter ausgebildet sein, wobei Feststoffe aus einer Suspension abgeschieden werden. Bei einer anderen Ausbildung als Entwässerungsdekanter wird die Konzentration des Feststoffes aus der Suspension maximiert, um den Feststoff möglichst trocken zu erhalten. In einer möglichen Ausbildung als Trenndekanter werden zwei sich chemisch nicht mischende Flüssigkeiten bei gleichzeitiger Abscheidung des Feststoffes voneinander getrennt. In der möglichen Form von Klassierdekantern werden ein Feststoffgemisch der Suspension in eine Feinstofffraktion (kleine Partikel) und eine Grobstofffraktion (große Partikel) aufgeteilt.

Die Dekanterzentrifuge umfasst eine Trommel sowie eine Schneckeneinrichtung, wobei die Schneckeneinrichtung in der Trommel relativ zu der Trommel um eine Drehachse drehbar über eine erste Lagervorrichtung gelagert ist. Die Trommel ist bevorzugt als eine Vollmanteltrommel ausgebildet, welche eine insbesondere geschlossene Umlauffläche aufweist. Die Schneckeneinrichtung ist als eine Fördereinrichtung konzipiert und umfasst beispielsweise gewendelte Flügelabschnitte als Fördermittel. Die Schneckeneinrichtung ist so angeordnet und/oder dimensioniert, dass diese bei einer Relativdrehung zu der Trommel Stoffe in eine Transportrichtung befördert.

Im Betrieb wird der Zwischenraum zwischen Schneckeneinrichtung und Trommel mit dem zu separierenden Stoffgemenge bzw. Stoffgemisch - zusammenfassend auch als Startgemisch zu bezeichnen - vorzugsweise kontinuierlich gefüllt, wobei sowohl die Trommel als auch die Schneckeneinrichtung um die gemeinsame Drehachse gleichsinnig, jedoch mit unterschiedlichen Winkelgeschwindigkeiten rotiert werden. Durch die Rotation werden Stoffe mit einer höheren spezifischen Dichte (z.B. in [kg/cm^3]) aufgrund der wirkenden Zentrifugalkraft radial außen zu der Drehachse an der Trommelinnenwand konzentriert und können dann durch die Schneckeneinrichtung in die Transportrichtung abtransportiert werden.

Im Rahmen der Erfindung wird vorgeschlagen, dass die erste Lagervorrichtung, welche die Schneckeneinrichtung in der Trommel lagert, ein oder mehrere Magnetlager aufweist. Vorzugsweise ist das Magnetlager als ein Radiallager ausgebildet, welches maßgeblich radiale Kräfte aufnimmt.

Der Vorteil dieser Weiterbildung ist darin zu sehen, dass Magnetlager gegenüber Verschmutzungen durch die Stoffe bzw. Stoffgemische meist unempfindlicher sind als die üblicherweise verwendeten Wälzlager. Die höhere Unempfindlichkeit ist dadurch begründet, dass das Magnetlager eine berührungslose oder im Wesentlichen berührungslose Lagerung umsetzt, wobei Verschmutzungen in dem Magnetlager nicht so schnell zu Beschädigungen oder Frühausfällen führen, wie die konventionell verwendeten Wälzkörperlager. Außerdem ist bzw. sind das oder die Magnetlager in der Lage, auch radiale Verschiebungen und Schwingungen der Schneckeneinrichtung relativ zu der Trommel bzw. zu der Drehachse abzufangen und gegebenenfalls zu dämpfen.

Bei einer ersten möglichen Ausführungsform der Erfindung ist mindestens eines der Magnetlager als ein passives Lager ausgebildet. Die magnetische Lagerung beruht bei dieser Ausführungsform auf der magnetischen Wechselwirkung von Permanentmagneten oder Permanentmagneten mit magnetischen Werkstoffen, wie z.B. Ferromagneten. Der Vorteil dieser Ausführungsform liegt darin, dass keine Energie zur Versorgung des oder der Magnetlager aufgewendet und zudem keine Steuerung für das Magnetlager eingesetzt werden muss.

Bei einer anderen Ausführungsform der Erfindung ist mindestens eines der Magnetlager als ein aktives Lager ausgebildet, welches beispielsweise durch die Zuführung elektrischer Energie Magnetfelder aufbaut. Derartige Magnetlager haben den Vorteil, dass diese belastungsgerecht gesteuert und/oder geregelt werden können. Insbesondere können aktive Lager zur aktiven Dämpfung und/oder Kompensation von Schwingungen der Schneckeneinrichtung relativ zu der Trommel eingesetzt werden. Vorteile können sich bei bevorzugten Ausführungsformen daraus ergeben, dass selbst bei einer beschädigten Schneckeneinrichtung auftretende Schwingungen effektiv gedämpft werden können.

Bei einer Weiterbildung der Erfindung ist vorgesehen, dass parallel zu dem Magnetlagern ein Fanglager angeordnet ist. Das Fanglager dient dazu, die Schneckeneinrichtung bei Deaktivierung des Magnetlagers zu stützen und/oder zu lagern. Ferner stellt das Fanglager Notlauf- oder Notlagereigenschaften zur Verfügung, für den Fall, dass das Magnetlager als aktive Baueinheit unbeabsichtigt deaktiviert wird.

Bei einer nächsten möglichen Ergänzung der Erfindung ist das oder die Magnetlager mit einer Dichtung ausgestattet. Die Dichtung dient vorzugsweise zur Abdichtung des Lagerinnenraums des Magnetlagers gegenüber dem Eindringen von Schmutz. Hier zeigt sich ein großer nutzbarer Vorteil der Erfindung, da die Dichtung des Magnetlagers deutlich einfacher ausgeführt werden kann als z. B. die Dichtung eines vergleichbaren Wälzlagers.

Bei einer vorteilhaften Weiterbildung der Erfindung ist die Schneckeneinrichtung an beiden freien Enden durch ein Magnetlager in der Trommel gelagert. Diese Ausbildung stellt eine Skalierung der Grundidee dar, nach der die Lagerung der Schneckeneinrichtung beidseitig über Magnetlager erfolgt.

Die Position des oder der Magnetlager ist vorzugsweise im Inneren der Trommel gewählt, so dass Trommel und Schneckeneinrichtung eine einbaufertige Baueinheit bilden können.

Um die auftretenden Beanspruchungen im Betrieb angepasst aufnehmen zu können, ist es bevorzugt, wenn das oder die Magnetlager einen Außendurchmesser in radialer Richtung von mindestens 100 mm, vorzugsweise von mindestens 200 mm und insbesondere von mindestens 300 mm aufweisen. Die Magnetlager sind somit an der Grenze zu den Großlagern oder bereits als Großlager ausgebildet.

Um einen ausreichenden Stoffdurchsatz in der Dekanterzentrifuge erreichen zu können, wird bevorzugt, dass die Schneckeneinrichtung in axialer Richtung der Drehachse eine Länge von mindestens 1 m, vorzugsweise von mindestens 3 m und insbesondere von mindestens 6 m aufweist. Es handelt sich hierbei somit um eine Dekanterzentrifuge, welche für den industriellen Einsatz ausgebildet ist.

Mit dem Ziel, eine Relativdrehung von Trommel und Schneckeneinrichtung ausführen zu können, wird vorzugsweise vorgeschlagen, dass die Trommel über eine zweite Lagervorrichtung um die Drehachse drehbar gelagert ist. Insbesondere sind Trommel und Schneckeneinrichtung jeweils motorisch angetrieben. Dabei sind die Motoren bzw. das oder die Getriebe derart ausgebildet und/oder angeordnet, dass im Betrieb die Trommel und die Schneckeneinrichtung mit unterschiedlichen Winkelgeschwindigkeiten um die Drehachse rotiert. Die Drehung erfolgt vorzugsweise gleichsinnig.

Bei einer konstruktiven Ausgestaltung der Erfindung weist die Trommel einen zylinderförmigen Abschnitt und einen konusförmigen Abschnitt auf. Die Stoffe mit höherer spezifischer Dichte werden durch die Schneckeneinrichtung aus dem zylinderförmigen Abschnitt und durch den konusförmigen Abschnitt zu ersten Auslassmöglichkeiten gefördert. Die verbleibenden Stoffe, insbesondere die verbleibende Flüssigkeit, mit geringerer Dichte, werden dagegen in Gegenrichtung zu zweiten Auslassmöglichkeiten geleitet.

Die Zuführung des Stoffgemisches erfolgt vorzugsweise koaxial zu der Drehachse von Trommel- und Schneckeneinrichtung, welcher in einem zentralen Bereich und/oder in einer Trennzone zu dem Innenraum der Trommel hin geöffnet ist. Im Betrieb wird das Stoffgemisch koaxial zu der Schneckeneinrichtung in die Trennzone eingebracht. Über die Rotation der Trommel werden die Feststoffe (Sedimente) in Folge der Zentrifugalkraft nach Außen geschleudert und mittels der Schneckeneinrichtung über den konusförmigen Abschnitt zu dem Feststoffauslass gefördert. Die Flüssigkeit wird gegenüber dem Feststoffaustritt nach Außen gefördert. Die Separation wird kontinuierlich durchgeführt.

Weitere Merkmale, Wirkungen und Vorteile der Erfindung ergeben sich aus der nachfolgenden Beschreibung eines bevorzugten Ausführungsbeispiels der Erfindung und der beigefügten Figur. Dabei zeigt:

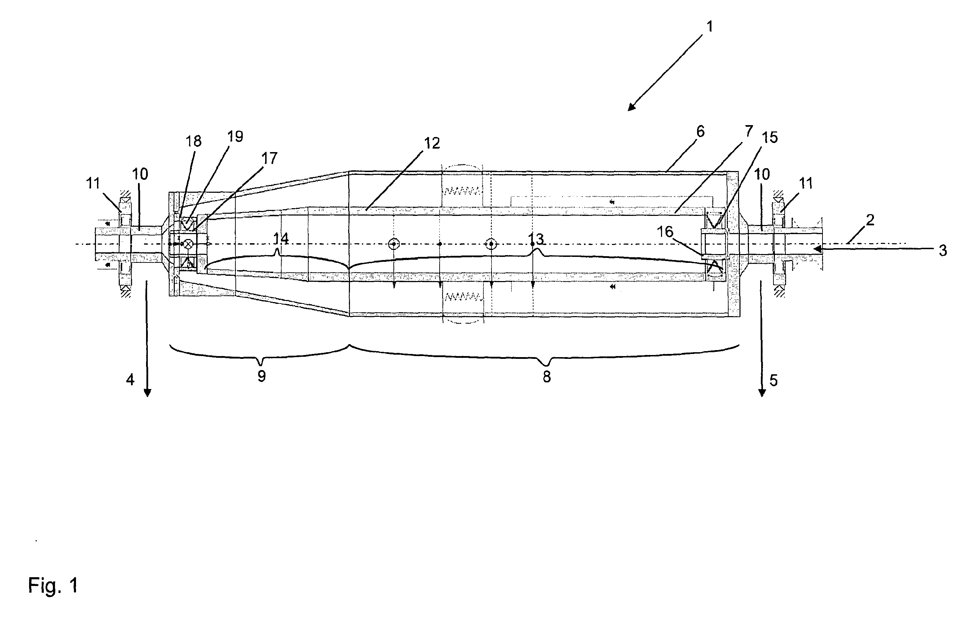

- Figur 1: einen schematischen Längsschnitt durch eine Dekanterzentrifuge als ein erstes Ausführungsbeispiel der Erfindung.

Die Figur 1 zeigt eine Dekanterzentrifuge 1 in einem Längsschnitt durch deren Drehachse 2. Die Dekanterzentrifuge 1 dient zur Separierung eines Stoffgemisches, welches gemäß Pfeil 3 zugeführt wird und durch die Dekanterzentrifuge 1 in ihre Stoffanteile separiert wird, wobei die festen Stoffanteile gemäß Pfeil 4 und die flüssigen Stoffanteile gemäß Pfeil 5 aus der Dekanterzentrifuge 1 ausgeworfen werden. Beispielsweise wird die Dekanterzentrifuge 1 zur Abwasserreinigung eingesetzt, wobei feste Bestandteile gemäß Pfeil 4 und flüssige Bestandteile gemäß Pfeil 5 ausgeworfen werden. Ferner kann die Dekanterzentrifuge 1 zur Behandlung von Kunststoffen etc. eingesetzt werden.

Die Dekanterzentrifuge 1 weist eine Trommel 6 und eine Schneckeneinrichtung 7 auf. Die Trommel 6 ist als eine Vollmanteleinheit ausgebildet und zeigt einen zylinderförmigen Abschnitt 8 sowie einen konusförmigen Abschnitt 9 im Bereich eines Auslasses zu dem Pfeil 4 auf. Die Gesamtlänge der beiden Abschnitte 8, 9 kann mehr als 1 m, bei weiteren Ausführungsformen mehr als 3 m und bei nochmals anderen Ausführungsformen mehr als 6 m betragen. An den freien Enden der Trommel 6 sind Stutzen 10 angesetzt, welche über eine stationäre Lagerung 11, insbesondere eine Wälzlagerung, um die Drehachse 2 drehbar gelagert sind.

In dem Innenraum der Trommel 6 ist die Schneckeneinrichtung 7 angeordnet, welche einen Grundkörper 12 aufweist, der an die Innenform der Trommel 6 angepasst ist und ebenfalls einen zylinderförmigen und einen konusförmigen - oder bei anderen Ausführungsformen einen rein zylindrischen - Abschnitt 13, 14 aufweist. An der radialen Außenseite des Grundkörpers 12 sind Wendelungen (nicht dargestellt) angeordnet, die von der radialen Länge so bemessen sind, dass sie berührungsfrei, jedoch eng an der Innenfläche der Trommel 6 anliegen. Der zylinderförmige Innenraum der Schneckeneinrichtung 7 bzw. des Grundkörpers 12 ist mit einer Durchlassöffnung in dem rechten Stutzen 10 strömungstechnisch verbunden, so dass das Stoffgemisch ausgehend von dem Pfeil 3 durch den Stutzen 10 in den Innenraum der Schneckeneinrichtung 7 geleitet werden kann. In einem zentralen Bereich des zylinderförmigen Abschnitts 13 sind nicht dargestellte Öffnungen eingebracht, welche das Stoffgemisch in den Ringspalt zwischen Grundkörper 12 und Trommel 6 auslassen.

Die Schneckeneinrichtung 7 läuft an ihrem freien Ende auf der Seite des zylinderförmigen Abschnitts 13 hohlzylinderförmig aus und ist an diesem Ende über ein erstes Magnetlager 15 auf einem inneren Trommelstutzen 16, welcher drehfest mit der Trommel 6 verbunden ist, gelagert.

Auf der gegenüberliegenden Seite ist ein innerer Schneckenstutzen 17 drehfest mit dem Grundkörper 12 und somit mit der Schneckeneinrichtung 7 verbunden, welcher in einer Hülse 18, die drehfest mit der Trommel 6 verbunden ist, über ein zweites Magnetlager 19 gelagert ist.

Die Magnetlager 15, 19 können als aktive oder als passive Magnetlager ausgebildet sein. Deren Außendurchmesser, also im Fall des ersten Magnetlagers 15 der freien Durchmesser des Grundkörpers 12 und im Fall des zweiten Magnetlagers 19 der freie Durchmesser der Hülse 18 sind größer als 100 mm, beispielsweise größer als 200 mm und insbesondere größer als 300 mm gewählt.

Die Magnetlager 15 und 19 sind gegenüber eintretendem Schmutz mittels nicht dargestellter Dichtungen abgedichtet. Die Magnetlager 15 und 19 weisen den Vorteil auf, dass zum einen das Eindringen von Schmutz durch Dichtungen gut kompensiert werden kann bzw. die Dichtungen einfach ausgeführt werden können und zum anderen durch eine beschädigte Schneckeneinrichtung 7 auftretende Schwingungen effektiv gedämpft werden können.

Nicht dargestellt ist die Antriebseinheit, welche es ermöglicht, die Schneckeneinrichtung 7 und die Trommel 6 gleichsinnig, jedoch mit unterschiedlichen Winkelgeschwindigkeiten zu rotieren. Mögliche Differenzgeschwindigkeiten sind beispielsweise 20 U/min bis 50 U/min.

Im Betrieb wird das Stoffgemisch gemäß Pfeil 3 durch den Stutzen 10 und den inneren Trommelstutzen 16 in das Innere der Schneckeneinrichtung 7 geleitet und über die nicht dargestellten Auslässe in den Ringspalt zwischen Schneckeneinrichtung 7 und Trommel 6 gebracht. Durch die Rotation der Trommel 6 wird das Stoffgemisch zentrifugiert. Die Feststoffe lagern sich an der Trommelwand ab, gleichzeitig bildet sich im zylindrischen Teil der Trommel ein Flüssigkeitsring aus. Über die nicht dargestellten Wendel der Schneckeneinrichtung 7 und die unterschiedlichen Winkelgeschwindigkeiten von Schneckeneinrichtung 7 und Trommel 6 werden die Feststoffanteile in der Figur 1 nach links transportiert, wohingegen die flüssigen Stoffanteile nach rechts entweichen. Durch den konusförmigen Abschnitt 9 erfolgt eine Trocknung und/oder Komprimierung der Feststoffanteile , welche an der Stirnseite der Trommel 6 über Auslassöffnungen mittels der Wendel der Schneckeneinrichtung 7 herausgepresst und gemäß Pfeil 4 ausgeworfen werden. An dem gegenüberliegenden Ende der Trommel 6 sind ebenfalls stirnseitige Öffnungen eingebracht, welche ein Entweichen von flüssigen Stoffanteilen ermöglichen. Nach Austreiben der Flüssigkeiten durch die Auslässe werden diese gemäß Pfeil 5 abgeführt.

### Bezugszeichenliste

- 1: Dekanterzentrifuge
- 2: Drehachse
- 3: Pfeil
- 4: Pfeil
- 5: Pfeil
- 6: Trommel
- 7: Schneckeneinrichtung
- 8: zylinderförmiger Abschnitt
- 9: konusförmiger Abschnitt
- 10: Stutzen
- 11: stationäre Lagerung
- 12: Grundkörper
- 13: zylinderförmiger Abschnitt
- 14: konusförmiger Abschnitt
- 15: erstes Magnetlager
- 16: Trommelstutzen
- 17: Schneckenstutzen
- 18: Hülse
- 19: zweites Magnetlager

## Patentansprüche

1. Dekanterzentrifuge (1) zur Separation von Stoffen
mit einer Trommel (6) und
mit einer Schneckeneinrichtung (7), welche in der Trommel (6) angeordnet ist,
wobei die Schneckeneinrichtung (7) über eine erste Lagervorrichtung (15,19) relativ zu der Trommel (6) um eine Drehachse (2) drehbar gelagert ist,
**dadurch gekennzeichnet,**
**dass** die erste Lagervorrichtung ein oder mehrere Magnetlager (15,19) aufweist.

2. Dekanterzentrifuge (1) nach Anspruch 1, **dadurch gekennzeichnet, dass** mindestens eines der Magnetlager (15,19) als ein passives Lager ausgebildet ist.

3. Dekanterzentrifuge (1) nach Anspruch 1 oder 2, **dadurch gekennzeichnet, dass** mindestens eines der Magnetlager (19,15) als ein aktives Lager ausgebildet ist.

4. Dekanterzentrifuge (1) nach einem der vorhergehenden Ansprüche, **dadurch gekennzeichnet, dass** parallel zu dem Magnetlager (15,19) ein Fanglager angeordnet ist.

5. Dekanterzentrifuge (1) nach einem der vorhergehenden Ansprüche, **dadurch gekennzeichnet, dass** das oder die Magnetlager (15,19) mit einer Dichtung ausgestattet sind.

6. Dekanterzentrifuge (1) nach einem der vorhergehenden Ansprüche, **dadurch gekennzeichnet, dass** die Schneckeneinrichtung (7) an beiden freien Enden über ein Magnetlager (15,19) in der Trommel (6) gelagert sind.

7. Dekanterzentrifuge (1) nach einem der vorhergehenden Ansprüche, **dadurch gekennzeichnet, dass** das oder die Magnetlager (15,19) im Inneren der Trommel (6) angeordnet sind.

8. Dekanterzentrifuge (1) nach einem der vorhergehenden Ansprüche, **dadurch gekennzeichnet, dass** das und/oder die Magnetlager (15,19) einen Außendurchmesser von mindestens 100 mm, vorzugsweise von mindestens 200 mm und insbesondere von mindestens 300 mm aufweisen.

9. Dekanterzentrifuge (1) nach einem der vorhergehenden Ansprüche, **dadurch gekennzeichnet, dass** die Schneckeneinrichtung (7) in axialer Richtung der Drehachse (2) eine Länge von mindestens 1 m, vorzugsweise mindestens 3 m und insbesondere mindestens 6 m aufweist.

10. Dekanterzentrifuge (1) nach einem der vorhergehenden Ansprüche, **dadurch gekennzeichnet, dass** die Trommel (6) über eine zweite Lagervorrichtung (11) um die Drehachse (2) drehbar gelagert ist.

11. Dekanterzentrifuge (1) nach einem der vorhergehenden Ansprüche, **dadurch gekennzeichnet, dass** diese ausgebildet ist, im Betrieb die Trommel (6) und die Schneckeneinrichtung (7) mit unterschiedlichen Winkelgeschwindigkeiten um die Drehachse (2) zu drehen.
